# EUROPEAN PATENT APPLICATION

(11) **EP 2 234 033 A1**
(43) Date of publication of application: **29.09.2010**
(21) Application number: 10156221.3
(22) Date of filing: 11.03.2010
(51) Int. Cl.: G06K 7/08, G06K 13/08, G07G 1/00

(54) **Magnetic stripe card reader device**

(30) Priority: 26.03.2009 JP 2009077413
(71) Applicant: Toshiba TEC Kabushiki Kaisha, Tokyo 141-8664 (JP)
(72) Inventor: Kawaguchi, Yuuki, Tokyo 141-8664 (JP)
(74) Representative: Gendron, Vincent Christian

(57) **Abstract**

A magnetic stripe card reader device (1) includes: a card reader unit (21) including: a slit-like card passage (21) for sliding a magnetic stripe card (C) in one direction in line with a position of a card slit (17) formed in a housing (14); and a magnetic head (24) configured to come into contact with a magnetic section of the card (C) slid in the card passage (23) and read data recorded in the magnetic section; and a card holding unit (22) provided further on a downstream side in a card moving direction than the card reader unit (21) and configured to hold, on a moving track of the card (C) slid in the card slit (17), the card (C) that comes out of the card passage (23) because of the sliding.

## Description

### CROSS-REFERENCE TO RELATED APPLICATION

This application claims the benefit of priority from Japanese Patent Application No. 2009-077413 filed on March 26, 2009, the entire content of which is incorporated herein by reference.

### TECHNICAL FIELD

The present invention relates to a magnetic stripe card reader device.

### BACKGROUND

A magnetic stripe card has a belt-like magnetic body and changes magnetism of magnetic particles to store various data. For example, in the distribution and retail industries, the magnetic stripe card is used for identification cards for store clerks, point cards for member customers, debit cards and credit cards for settlement, and the like. In a general store, a card processing apparatus configured to read data from the magnetic stripe card is placed on a checkout counter together with a checkout apparatus. A store clerk inserts a magnetic section of the card into a slit-like card passage linearly formed in a housing of the card processing apparatus and slides the card along the card passage. A magnetic head is arranged in the card passage. The magnetic head strokes the magnetic section of the card slid along the card passage and reads data stored in the magnetic body.

A card used in the distribution and retail industries is not often immediately returned to a customer even if reading of data from the card is finished. In general, the card is often returned together with paper (e.g., a receipt or a slip) on which a result of predetermined data processing performed by the checkout apparatus based on the data read from the card is print-output. Therefore, while performing operation necessary for the data processing for causing the checkout apparatus to perform predetermined paper output, the store clerk puts the card somewhere appropriate on the checkout counter or performs the necessary operation while holding the card. Because of such operation, in some case, the store clerk loses the card or makes a mistake in operation of the apparatus.

As a magnetic stripe card reader device for solving such a deficiency and inconvenience, for example, a card reading apparatus disclosed in JP-A-61-289482 is known. In the card reading apparatus, a holding slit that can receive and hold a card deeper than a reading slit is provided in a section beside a card reading section of the reading slit while being caused to communicate with the reading slit.

However, with such a card reading apparatus, a card from which information is read by the card reading section is dropped into the holding slit. Therefore, the card is substantially entirely stored in the holding slit. This makes it difficult to take out the card from a card holding unit.

The present invention has been devised in view of the above and it is an object of the present invention to provide a magnetic stripe card reader device with which manual card drawing operation, card holding operation, and card returning operation can be smoothly performed.

### SUMMARY

According to an aspect of the present invention, there is provided a magnetic stripe card reader device including: a card reader unit including: a slit-like card passage for sliding a magnetic stripe card in one direction in line with a position of a card slit formed in a housing; and a magnetic head configured to come into contact with a magnetic section of the card slid in the card passage and read data recorded in the magnetic section; and a card holding unit provided further on a downstream side in a card moving direction than the card reader unit and configured to hold, on a moving track of the card slid in the card slit, the card that comes out of the card passage because of the sliding.

### DESCRIPTION OF THE DRAWINGS

FIG. 1 is an external perspective view of a checkout lane in which a scanner apparatus according to an embodiment of the present invention is arranged;
FIG. 2 is a perspective view of a magnetic stripe card reader device provided in an upper housing;
FIG. 3 is a perspective view of the configuration of a card holding unit;
FIG. 4 is a disassembled perspective view of a pressing section;
FIG. 5 is a perspective view of a card reading state; and
FIG. 6 is a perspective view of a card inserting state.

### DETAILED DESCRIPTION

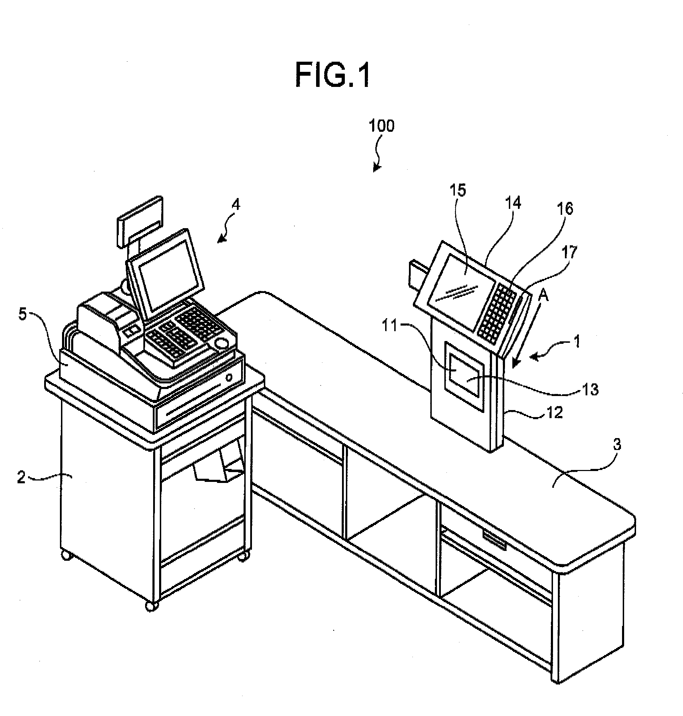

FIG. 1 is an external perspective view of a checkout lane 100 in which a scanner apparatus 1 according to an embodiment of the present invention is arranged. The checkout lane 100 includes a register table 2 and a checker table 3. A point of sales (POS) terminal 4 is arranged on the register table 2 at height convenient for user operation while being placed on a drawer 5. The scanner apparatus 1 of a vertical type is fixedly set on the checker table 3.

The scanner apparatus 1 includes a lower housing 12 of a vertical type in which a reading window 11 is provided in the center. The lower housing 12 includes a barcode scanner 13 located in an inner portion of the reading window 11. The lower housing 12 includes an upper housing 14 at the upper end thereof. The upper housing 14 includes a liquid crystal display (LCD) with touch panel 15 and a keyboard 16. The scanner apparatus 1 outputs a commodity code read by the barcode scanner 13 to the POS terminal 4.

A customer carries commodities put in a shopping basket into the checkout lane 100 having such a configuration and places the shopping basket containing the commodities on the checker table 3. An operator takes the commodities one by one from the shopping basket placed on the checker table 3 and holds a barcode attached to the commodity over the reading window 11 of the barcode scanner 13 to thereby read a commodity code attached to the commodity. Thereafter, the operator puts the commodity, the commodity code of which is read, in a shopping basket on the checker table 3 on the POS terminal 4 side.

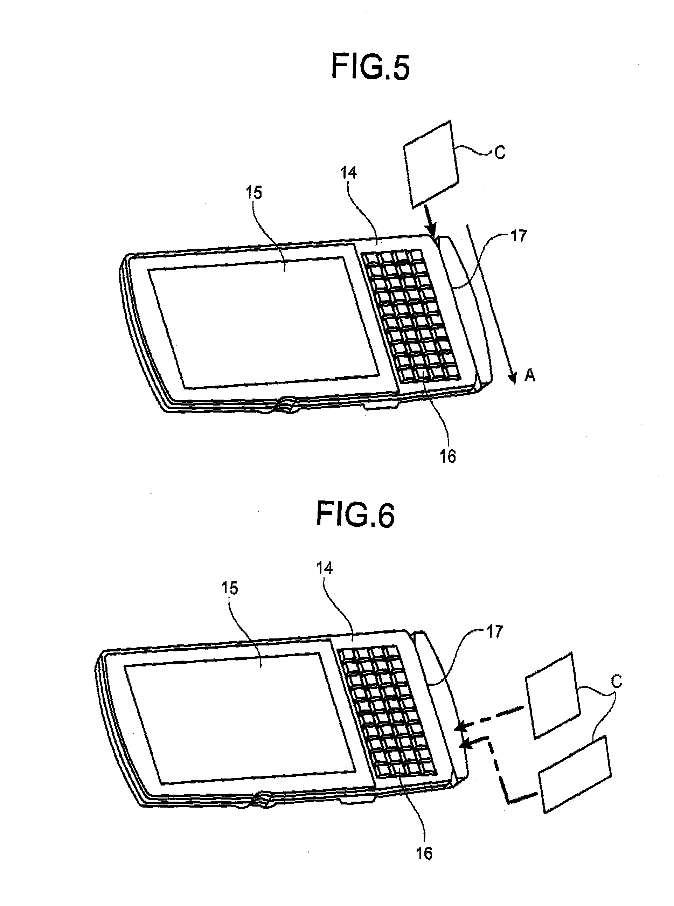

The scanner apparatus 1 further includes, on an upstream side in a commodity moving direction of the keyboard 16, a slit-like (groove-like) card slit 17 linearly formed along a short side direction of the keyboard 16 (the vertical direction). The card slit 17 guides a card C (see FIG. 5) in one direction (hereinafter referred to as card moving direction A). The card C inserted in the card slit 17 is slid. The lower end of the card slit is opened. The card C slid in the card slit 17 directly passes through the card slit 17 downward.

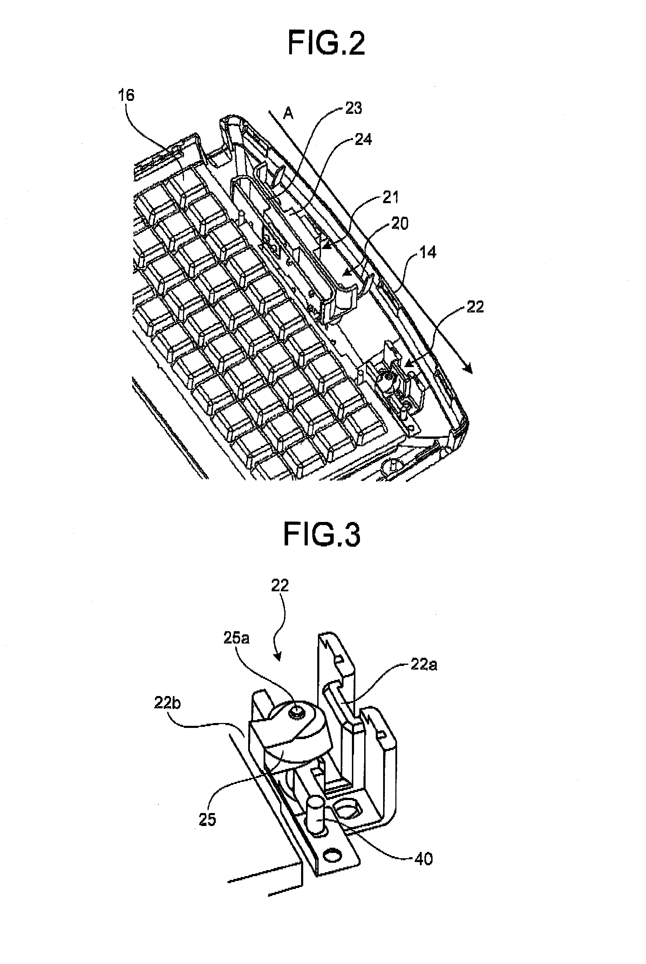

A magnetic head 24 (see FIG. 2) is incorporated in the upper housing 14 and arranged along the card slit 17. The operator brings a magnetic section of the card C into contact with the magnetic head 24, which is arranged along the card slit 17, to rub the magnetic section against the magnetic head 24 to thereby read information stored in a magnetic body.

FIG. 2 is a perspective view of a magnetic stripe card reader device 20 provided in the upper housing 14. As shown in FIG. 2, the magnetic stripe card reader device 20 includes a card reader unit 21 located on an upstream side in the card moving direction A and a card holding unit 22 located on a downstream side in the card moving direction A.

The position of the card reader unit 21 of the magnetic stripe card reader device 20 coincides with the position of the card slit 17 of the upper housing 14 that is a housing of the scanner apparatus 1. The card reader unit 21 includes a groove-like card passage 23 for sliding the card C. The card reader unit 21 includes, in a position where the card reader unit 21 comes into contact with the magnetic section of the card C slid through the card passage 23 (a surface on the opposite side of the keyboard 16 in the card passage 23 in this embodiment), the magnetic head 24 configured to read data stored in the magnetic section of the card C.

On the other hand, the card holding unit 22 of the magnetic stripe card reader device 20 is provided on a moving track of the card C slid through the card passage 23 of the card reader unit 21 and holds the card C that comes out of the card passage 23 because of the sliding. FIG. 3 is a perspective view of the configuration of the card holding unit 22. As shown in FIG. 3, the card holding unit 22 includes a wall-like guide section 22a provided on the magnetic head 24 side of the card reader unit 21 and configured to guide the card C that finishes passing through the card passage 23 and a pressing section 22b provided on the opposite side of the magnetic head 24 of the card reader unit 21. The card holding unit 22 is spaced apart by a distance same as the length of the card C from the end on the downstream side of the card moving direction A of the card passage 23 of the card reader unit 21. The card holding unit 22 can hold the card C immediately after the card C comes out of the card passage 23 because of the sliding. In the magnetic stripe card reader device 20, a sliding distance of the card C can be reduced. Therefore, it is possible to reduce the size of the apparatus.

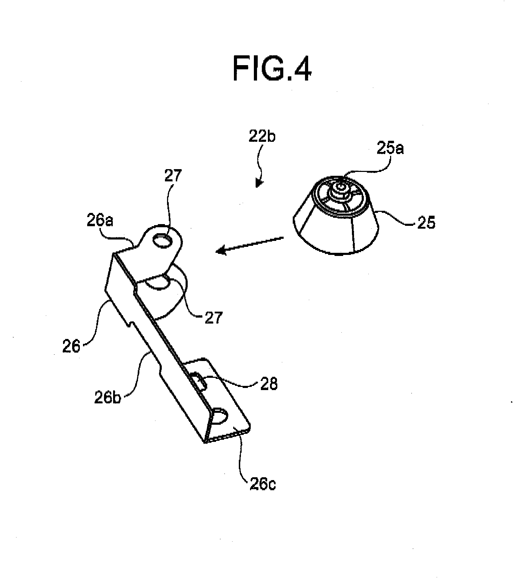

FIG. 4 is a disassembled perspective view of the pressing section 22b. As shown in FIG. 4, the pressing section 22b includes a conical roller 25 and a leaf spring member 26. The conical roller 25 is formed in a substantially conical shape (shaped such that a diameter of a sectional shape thereof gradually increases from the card slit 17 side) and has projection-like rotating shafts 25a formed to project at the vertex and the bottom of a cone. The leaf spring member 26 is integrally molded with an elastic material such as resin or metal. The leaf spring member 26 includes a roller holding section 26a, an elastic section 26b, and an attaching section 26c. The elastic section 26b is formed in an elongated thin plate shape having width substantially the same as the thickness of the conical roller 25 and has elasticity. The roller holding section 26a is made of two thin plates having elasticity provided to be opposed to one end of the elastic section 26b. The roller holding section 26a includes hole-like bearings 27 configured to respectively pivotably hold the rotating shafts 25a of the conical roller 25. Specifically, the conical roller 25 is inserted while spreading out the two thin plates of the roller holding section 26a and pivotably held in the bearings 27. Specifically, the roller holding section 26a holds the conical roller 25 such that the vertex of the cone is located on the card slit 17 side. The attaching section 26c provided at the other end of the elastic section 26b includes an attaching hole 28 for attaching the leaf spring member 26 to a projection 40 projecting from the upper housing 14.

The conical roller 25 of such a pressing section 22b and a wall surface of the guide section 22a are set in contact with each other on the moving track of the card C slid through the card passage 23 of the card reader 21 or are spaced apart by a distance equal to or smaller than the thickness of the card C.

With such a configuration, as shown in FIG. 5, the operator slides the card C, which the operator receives from the customer for checkout, in the card slit 17 along the card moving direction A. According to the sliding, the magnetic head 24 of the card reader unit 21 reads data stored in the magnetic section of the card C. After the reading of the data of the card C by the magnetic head 24, when the operator continues to slide the card C, which finishes passing through the card passage 23 of the card reader unit 21, in the card slit 17 along the card moving direction A, the card C reaches the card holding unit 22 of the magnetic card reader device 20.

The card C that reaches the card holding unit 22 enters between the conical roller 25 of the pressing section 22b and the wall surface of the guide section 22a. When the card C enters between the conical roller 25 of the pressing section 22b and the wall surface of the guide section 22a, the card C is braked by being pressed by the conical roller 25 with the elasticity of the elastic section 26b of the pressing section 22b. The conical roller 25 of the pressing section 22b and the wall surface of the guide section 22a press and hold the entered card C. When the operator attempts to further slide the card C pressed and held by the conical roller 25 of the pressing section 22b and the wall surface of the guide section 22a, the card C is not prevented from being slid because the conical roller 25 rotates.

Further, even when the card C is pulled out from the card slit 17, as shown in FIG. 6, the operator inserts the card C into the card holding unit 22 from above the card slit 17, whereby the card C is held in the card holding unit 22. When the operator inserts the card C into the card holding unit 22 to cause the card holding unit 22 to hold the card C, the conical shape of the conical roller 25 leads in the insertion of the card C. When the operator inserts the card C into the card holding unit 22 to cause the card holding unit 22 to hold the card C in this way, the card C can be held irrespectively of whether the card is inserted lengthwise or sideways or with the front side or the rear side thereof facing the operator.

As explained above, the magnetic stripe card reader device 20 includes the card holding unit 22. The card holding unit 22 is provided further on the downstream side in the card moving direction than the card reader unit 21 having the magnetic head 24. The magnetic head 24 comes into contact with the magnetic section of the card C slid through the slit-like card passage 23 and reads data of the card C. The card passage 23 is provided in the position coinciding with the position of the card slit 17 formed in the upper housing 14 that is the housing of the scanner apparatus 1. The card holding unit 22 holds, on the moving track of the card C slid in the card slit 17, the card C that comes out of the card passage 23 because of the sliding.

The operator holds the received card C on the moving track of the card C slid in the card slit 17. Therefore, the operator can smoothly perform card drawing operation, card holding operation, and card returning operation. Further, the card C, from which data is read, is held in a position where a customer can easily check the card C. Therefore, the customer does not need to worry about data skimming, loss, and the like of the card C that is not kept at hand and can wait for checkout with an easy mind.

In this embodiment, a roller shaped such that a diameter of a sectional shape thereof gradually increases from the card slit 17 side is used as the conical roller 25 having a substantially conical shape. However, the roller is not limited to this and may be, for example, a roller having a substantially semispherical shape.

Further effects and modifications can be easily derived by those skilled in the art. Therefore, a wider aspect of the present invention is not limited by the specific details and the representative embodiment represented and described above. Therefore, various modifications are possible without departing from the spirit or the scope of the general concept of the invention defined by the appended claims and their equivalents.

## Claims

1. A magnetic stripe card reader device (1) **characterized by** comprising:
a card reader unit (21) including:
a slit-like card passage (23) for sliding a magnetic stripe card (C) in one direction in line with a position of a card slit (17) formed in a housing (14); and
a magnetic head (24) configured to come into contact with a magnetic section of the card (C) slid in the card passage (23) and read data recorded in the magnetic section; and
a card holding unit (22) provided further on a downstream side in a card moving direction than the card reader unit (21) and configured to hold, on a moving track of the card (C) slid in the card slit (17), the card (C) that comes out of the card passage (23) because of the sliding.

2. The device according to claim 1, **characterized in that** the card holding unit (22) is provided spaced apart by a distance substantially the same as length of the card (C) from an end on the downstream side in the card moving direction of the card passage (23).

3. The device according to claim 1, **characterized in that** the card holding unit (22) includes:
a guide section (22a) provided on the magnetic head side and configured to guide the card (C) that finishes passing through the card passage (23); and
a pressing section (22b) provided on an opposite side of the magnetic head.

4. The device according to claim 3, **characterized in that** the pressing section (22b) includes:
a leaf spring member (26) having elasticity; and
a roller (25) shaped such that a diameter of a sectional shape thereof gradually increases from the card slit side and pivotably held by the leaf spring member (26), and
the roller (25) and a wall surface of the guide section (22a) are provided to be set in contact with each other on the moving track of the card (C) slid through the card passage (23) or located spaced apart by a distance equal to or smaller than thickness of the card (C).

5. The device according to claim 4, **characterized in that** the leaf spring member (26) includes:
an elastic section (26b) formed in an elongated thin plate shape having width substantially the same as thickness of the roller (25);
a roller holding section (26a) provided at one end of the elastic section and configured to hold the roller (25); and
an attaching section (26c) provided at the other end of the elastic section (26b) and attached to the housing (14).

6. The device according to claim 5, **characterized in that** the roller (25) is shaped such that the diameter of the sectional shape thereof gradually increases from the card slit (17) side and has a pair of projection-like rotating shafts (25a) formed to project.

7. The device according to claim 6, **characterized in that** the roller holding section (26a) is made of two thin plates having elasticity provided to be opposed to the one end of the elastic section and includes hole-like bearings (27) configured to respectively pivotably hold the rotating shafts (25a) of the roller (25).

8. The device according to claim 5, **characterized in that** the attaching section (26c) includes an attaching hole (28) for attaching the leaf spring member (26) to a projection (40) projecting from the housing (14).

9. The device according to claim 4, **characterized in that** the leaf spring member (26) is integrally molded with a resin or metal elastic material.

10. The device according to claim 5, **characterized in that** the roller (25) is formed in a substantially conical shape and has projection-like rotating shafts (25a) formed to project at a vertex and a bottom of a cone.

11. The device according to claim 5, **characterized in that** the roller (25) is formed in a substantially semispherical shape and has a pair of projection-like rotating shafts (25a) formed to project.
